# EUROPÄISCHE PATENTANMELDUNG

(11) **EP 4 148 460 A1**
(43) Veröffentlichungstag der Anmeldung: **15.03.2023**
(21) Anmeldenummer: 21196353.3
(22) Anmeldetag: 13.09.2021
(51) Int. Cl.: G01S 7/487, G01S 17/58, G01S 17/931, G01S 7/4865, G01S 17/10, G01S 7/481

(54) **OPTISCHER SENSOR UND VERFAHREN ZUR DETEKTION VON OBJEKTEN MITTELS EINES OPTISCHEN SENSORS**

(71) Anmelder: Leuze electronic GmbH + Co. KG, 73277 Owen/Teck (DE)
(72) Erfinder: Sanzi, Friedrich, 73230 Kirchheim/Teck (DE); Struckmeier, Anselm, 73277 Owen/Teck (DE); Wolf, Tilo, 73240 Wendlingen (DE); Linsenmayer, Jörg, 73272 Neidlingen (DE)
(74) Vertreter: Ruckh, Rainer Gerhard

(57) **Zusammenfassung**

Die Erfindung betrifft einen optischen Sensor (1) zur Detektion von Objekten (12) mit einer Sende-/Empfangseinheit (2), umfassend einen Sendelichtstrahlen (8) emittierenden Sender (3) und einen Empfangslichtstrahlen (9) empfangenden Empfänger (4), und mit einer Auswerteeinheit (5), in welcher in Abhängigkeit von Empfangssignalen des Empfängers (4) eine zeitliche Folge von Messwerten generiert ist, wobei die Messwerte Distanzwerte oder Positionswerte sind. Wenigstens ein adaptives Kalman-Filter, in welchem die Messwerte gefiltert sind, ist vorgesehen.

## Beschreibung

Die Erfindung betrifft einen optischen Sensor und ein Verfahren zur Detektion von Objekten mittels eines optischen Sensors.

Derartige optische Sensoren dienen allgemein zur Detektion von Objekten. Hierzu weist der optische Sensor eine Sende-/Empfangseinheit mit wenigstens einem Sendelichtstrahlen emittierenden Sender und einem Empfangslichtstrahlen empfangenden Empfänger auf. Zur Objektdetektion werden typischerweise die zum Senden emittierten Sendelichtstrahlen zum Objekt geführt, von diesem reflektiert und dann als Empfangslichtstrahlen weiter zum Empfänger geführt. Die dadurch am Ausgang des Empfängers anstehenden Empfangssignale werden in einer Auswerteeinheit des optischen Sensors ausgewertet, wodurch eine zeitliche Folge von Messwerten generiert wird.

Der optische Sensor kann beispielsweise als Distanzsensor ausgebildet sein. Dann sind die Messwerte Distanzwerte, die die Distanz des Objekts zum optischen Sensor angeben.

Die Messwerte sind prinzipbedingt fehlerbehaftet. Beispielsweise durch Messwertrauschen sind die Messwerte Schwankungen unterworfen. Zur Reduzierung derartiger Messwertfehler ist es bekannt, eine Mitteilung über mehrere Messwerte durchzuführen. Durch Rauschen oder sonstige Effekte bedingte Schwankungen der Messwerte können dadurch reduziert werden, so dass die Messfehler bei der Objektdetektion reduziert werden.

Derartige Mittelungsverfahren führen dann zu einer effizienten Reduzierung der Messfehler und damit zu einer erhöhten Messgenauigkeit, wenn sich die Position des Objekts zum optischen Sensor während der Objektdetektion nicht ändert.

Probleme treten jedoch dann auf, wenn sich das Objekt relativ zum optischen Sensor bewegt, so dass sich dessen Position oder dessen Distanz zum optischen Sensor während der Mittelwertbildung der Messwerte ändert. Ist der optische Sensor beispielsweise als Distanzsensor ausgebildet, der Messwerte in Form von Distanzwerten generiert, so führt eine Mittelung der Messwerte dann zu einer Verfälschung der Messergebnisse, wenn sich während der Mittelung der Messwerte die Distanz des Objekts zum optischen Sensor ändert. Insbesondere treten dann sogenannte Schleppfehler bei der Mittelwertbildung auf.

Zudem wird die Reaktionszeit des optischen Sensors bei der Generierung von Ausgangssignalen durch die Mittelwertbildung in unerwünschter Weise erhöht.

Der Erfindung liegt die Aufgabe zugrunde, einen optischen Sensor der eingangs genannten Art bereitzuhalten, bei welchem insbesondere auch für relativ zum optischen Sensor bewegte Objekte eine genaue und präzise Objektdetektion gewährleistet ist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft einen optischen Sensor zur Detektion von Objekten mit einer Sende-/Empfangseinheit umfassend einen Sendelichtstrahlen emittierenden Sender und einen Empfangslichtstrahlen empfangenden Empfänger und mit einer Auswerteeinheit, in welcher in Abhängigkeit von Empfangssignalen des Empfängers eine zeitliche Folge von Messwerten generiert ist, wobei die Messwerte Distanzwerte oder Positionswerte sind. Wenigstens ein adaptives Kalman-Filter, in welchem die Messwerte gefiltert sind, ist vorgesehen.

Die Erfindung betrifft weiterhin ein Verfahren zur Detektion von Objekten mittels eines optischen Sensors.

Der Grundgedanke der Erfindung besteht somit darin, zur Filterung der Messwerte und damit zur Erhöhung der Messwertgenauigkeit des optischen Sensors ein adaptives Filter einzusetzen, dessen Filterkoeffizienten an aktuelle Änderungen der Messwerte während des Betriebs des optischen Sensors fortlaufend angepasst werden. Dadurch erfolgt auch bei sich schnell ändernden Messwerten eine an diese Änderungen angepasste Filterung, sodass die Änderungen der Messwerte keine Messwertverfälschungen bei den durchzuführenden Filterungen verursachen.

Generell wird mit der erfindungsgemäßen Filterung das Messwertrauschen der erhaltenen Ausgangssignale verbessert und dadurch die Messwertgenauigkeit des optischen Sensors verbessert. Das Messwertrauschen der dem adaptiven Kalman-Filter zugeführten Eingangssignale, das heißt der aus den Empfangssignalen generierten Folge von Messwerten, hängt insbesondere von der Aperturgröße des Empfängers ab. Durch die erfindungsgemäße Filterung kann ein höheres Messwertrauschen der Eingangssignale in Kauf genommen werden. Dadurch kann eine Kostenreduktion des optischen Sensors und/oder eine Reduktion der Baugröße des optischen Sensors erzielt werden, ohne dass Einbußen in der Messgenauigkeit hingenommen werden müssen.

Die mit dem optischen Sensor generierten Messwerte sind generell Distanzwerte oder Positionswerte. Schnelle Änderungen der Messwerte treten damit bei hohen Relativgeschwindigkeiten des optischen Sensors auf. Mit dem erfindungsgemäßen optischen Sensor können demzufolge auch sich schnell bewegende Objekte präzise hinsichtlich ihrer Position beziehungsweise ihrer Distanz zum optischen Sensor erfasst werden.

Dabei erfolgt die Filterung der Messwerte und deren Ausgabe in Echtzeit.

Dies bedeutet, dass die Ausgabe eines gebildeten Messwerts unmittelbar nach dem dieser mit der Sende-/Empfangseinheit des optischen Sensors erfasst wurde im gleichen Zeitschritt wie die Filterung erfolgt. Da anders als bei einer Mittelwertbildung keine Filterung einer zeitlichen Folge durchgeführt wird, sondern jeder einzelne Messwert in Echtzeit gefiltert und dann ausgegeben wird, wird eine sehr kurze Reaktionszeit des optischen Sensors bei der Generierung von Ausgangssignalen erhalten.

Generell ist für die Messwerte des optischen Sensors ein applikationsabhängiger Bereich der Rauschleistung gegeben. Vorteilhaft ist demzufolge der wenigstens eine Kalman-Filter an diesen Bereich der Rauschleistung angepasst.

Das oder jedes Kalman-Filter kann dabei eine frei wählbare Dimension M aufweisen. Besonders vorteilhaft weist das oder jedes Kalman-Filter die Dimension M = 3 oder M = 4 auf. Ein Kalman-Filter mit der Dimension M = 3 weist einen Zustandsvektor mit den Zustandsgrößen Position, Geschwindigkeit und Beschleunigung auf. Ein Kalman-Filter mit der Dimension M = 4 weist einen Zustandsvektor mit den Zustandsgrößen Position, Geschwindigkeit, Beschleunigung und der Ableitung der Beschleunigung (Ruck) auf.

Gemäß einer einfachen Ausgestaltung ist nur ein adaptives Kalman-Filter vorgesehen, das an den gesamten Bereich der Rauschleistung angepasst ist.

In diesem Fall ist das Kalman-Filter als adaptives Filter mit variablen Filterkoeffizienten, die an die abstrakten Messwerte angepasst werden, ausgebildet.

Gemäß einer besonders vorteilhaften Ausführungsform der Erfindung sind mehrere adaptive Kalman-Filter vorgesehen, die an unterschiedliche Bereiche der Rauschleistung angepasst sind.

Die Rauschleistung wird vorteilhaft mittels eines weiteren Filters, insbesondere einem IIR-Filter 1. Ordnung, geschätzt. Dann kann abhängig von der Rauschleistung auf einen geeigneten Kalman-Filter umgeschaltet werden, der für den jeweiligen Bereich der Rauschleistung am besten geeignet ist. Vorteilhaft hierbei ist, dass sich die einzelnen Kalman-Filter hinsichtlich ihrer Verstärkungen unterscheiden, jedoch unveränderliche Filterparameter aufweisen, so dass mit den einzelnen Kalman-Filtern eine schnelle Filterung mit geringer Rechenleistung realisiert werden kann. Durch die Umschaltung zwischen den einzelnen Kalman-Filtern wird mit der Gesamtheit dieser Kalman-Filter ein spezifisches adaptives Filtersystem realisiert, mit dem eine an die Applikationsbedingungen angepasste adaptive Filterung der Messwerte des optischen Sensors realisiert wird. Dabei ist besonders vorteilhaft, dass nicht in jedem Zeitschritt die Kalman-Verstärkung, Error-Kovarianz-Matrizes und dergleichen erneut berechnet werden müssen.

Besonders vorteilhaft werden die Kalman-Filter für ein in der Applikation zu erwartendes Bewegungsszenario eingelernt. Das Einlernen erfolgt beispielsweise in einer Simulation, in der für die Anwendung typische Bewegungsszenarien vorhanden sind. Eingelernt wird jeweils der Parameter Q (Systemrauschen) des Kalman-Filters, woraufhin die Kalman-Verstärkung berechnet wird. Diese Kalman-Verstärkung konvergiert jeweils mit der Zeit und kann somit in der Applikation als konstant angenommen werden und muss somit nicht in jedem Zeitschritt berechnet werden. Für unterschiedliche Kalman-Filter liegen dann verschiedene konstante Kalman-Verstärkungen vor. Beispielsweise kann eine Kalman-Verstärkung für ein Kalman-Stillstandsfilter vorliegen und eine andere Kalman-Verstärkung für ein Kalman-Bewegungsfilter. Typischerweise wird mit dem optischen Sensor ein spezifisches Messobjekt detektiert, wobei die Relativposition und Relativgeschwindigkeit zwischen optischer Sensor und Messobjekt variieren können.

In diesem Fall werden die Parameter der Kalman-Filter für unterschiedliche Geschwindigkeitsbereiche der Geschwindigkeit des optischen Sensors relativ zu einem Messobjekt eingelernt.

Besonders vorteilhaft sind ein Kalman-Stillstandsfilter und ein Kalman-Bewegungsfilter vorgesehen.

Das Kalman-Stillstandsfilter ist für den Stillstand oder kleine Geschwindigkeiten des optischen Sensors relativ zum Messobjekt geeignet, wobei als Parameter des Kalman-Stillstandsfilters ein in der Anwendung zu erwartendes Messrauschen vorgegeben wird. Das Kalman-Bewegungsfilter ist für größere Geschwindigkeiten geeignet, wobei für das Kalman-Bewegungsfilter als Parameter ein kleineres Messrauschen vorgegeben wird.

Vorteilhaft wird eine geschwindigkeitsabhängige Umschaltung zwischen Kalman-Filtern durchgeführt.

Damit ist für jeden Geschwindigkeitsbereich das optimale Kalman-Filter aktiviert.

Dies wird zweckmäßig dadurch realisiert, dass ein mittels einer Geschwindigkeitsschätzung ermittelter Geschwindigkeitswert mit wenigstens einem Schwellwert verglichen wird und abhängig hiervon die Umschaltung zwischen Kalman-Filtern erfolgt.

Generell können mehrere Schwellwerte vorgesehen sein, um so eine Umschaltung zwischen mehreren Kalman-Filtern zu realisieren.

Vorteilhaft ist nur ein Schwellwert vorgesehen, wobei bei Geschwindigkeitswerten unterhalb des Schwellwerts nur das Kalman-Stillstandsfilter aktiviert ist, und bei Geschwindigkeitswerten oberhalb des Schwellwerts nur das Kalman-Bewegungsfilter aktiviert ist.

Prinzipiell kann ein Kalman-Filter selbst zur Geschwindigkeitsschätzung verwendet werden. Als Startwert für die Geschwindigkeitsschätzung wird die Geschwindigkeit V = 0 angesetzt. Der Kalman-Filter arbeitet dann rekursiv und nähert die Schätzwerte für Position, Geschwindigkeit und Beschleunigung den jeweiligen Istwerten an.

Es hat sich gezeigt, dass die so gewonnenen Schätzwerte für die Geschwindigkeit relativ ungenau sind. Daher ist es vorteilhaft die Geschwindigkeitsschätzung mit einem weiteren Filter, insbesondere einem IIR-Filter, durchzuführen. Dieses Filter arbeitet auf der Basis der zeitlichen Differenzen der Positionswerte, wobei die Differenzen jeweils aus einem Positionswert zum aktuellen Zeitpunkt und einem um ein Zeitintervall ΔT vorhergegangenen Zeitpunkt aus dem jeweils aktiven Kalman-Filter gebildet wird. Das Zeitintervall Δ*T* ändert sich dabei in Abhängigkeit von der Geschwindigkeit. Zusätzlich kann ein IIR-Filter eingesetzt werden, um in der Geschwindigkeitsschätzung das Rauschen weiter zu unterdrücken. Damit lässt sich eine erheblich zuverlässige Geschwindigkeitsschätzung erzielen.

Prinzipiell kann für die Umschaltung ein fester Schwellwert verwendet werden. Besonders gute Ergebnisse für die Filterung werden jedoch erhalten, wenn der oder die Schwellwerte variabel und von der Rauschleistung abhängig sind.

Vorteilhaft erfolgt die Vorgabe des Schwellwerts abhängig von der mittels eines IIR-Filters geschätzten Rauschleistung.

Damit gelingt eine gute Anpassung des Schwellwerts an die jeweilige Applikation. Bei einem System mit einem variablen Schwellwert zur Umschaltung zwischen eines Kalman-Stillstandsfilters und Kalman-Bewegungsfilters wird ein Kompromiss zwischen folgenden beiden Anforderungen erzielt.

Einerseits sollte der Schwellwert möglichst klein sein, damit bei Hochfahren der Geschwindigkeit vom Stillstand aus möglichst schnell eine Umschaltung im Kalman-Stillstandsfilter auf den Kalman-Bewegungsfilter erfolgt. Wenn zu spät umgeschaltet wird, wird für eine gewisse Zeit bei hoher Geschwindigkeit das Stillstandsfilter eingesetzt. Das führt in diesem Zeitabschnitt wiederum zu einem starken Schleppfehler.

Andererseits sollte der Schwellwert möglichst groß sein, damit das adaptive Kalman-Filter im Stillstand nicht ständig hin- und herschaltet. Da die Positionswerte verrauscht sind, ist auch die geschätzte Geschwindigkeit leicht verrauscht. Im Stillstand wird also nicht exakt V = 0 geschätzt, sondern es werden durch das Rauschen sehr kleine Geschwindigkeiten geschätzt. Ist der Schwellwert zu klein, schaltet das adaptive Kalman-Filter im Stillstand ständig zwischen Stillstand- und Bewegungsfilter hin und her, was nachteilig für den MSE (mean square error) ist.

Gemäß einer ersten Variante ist der optische Sensor ein Distanzsensor.

Insbesondere wird im Distanzsensor eine Distanzmessung nach einem Phasenmessverfahren oder einem Impuls-Laufzeitverfahren durchgeführt.

Gemäß einer zweiten Variante ist der optische Sensor ein Codeleser, mittels dessen in Marken eines Positionsmaßsystems enthaltende Codes erfassbar sind, wobei in den Codes einer Marke jeweils deren Position innerhalb des Positionsmaßsystems kodiert ist.

Die Erfindung wird im Folgenden anhand der Zeichnungen erläutert:
- Figur 1:: Schematische Darstellung eines ersten Ausführungsbeispiels des erfindungsgemäßen optischen Sensors mit einem zugeordneten Positionsmaßsystem.
- Figur 2:: Schematische Darstellung eines zweiten Ausführungsbeispiels des erfindungsgemäßen optischen Sensors.
- Figur 3:: Darstellung der Komponenten zur Verarbeitung von Messwerten des optischen Sensors gemäß Figur 1 beziehungsweise Figur 2.
- Figur 4:: Zeitdiagramme für eine Filterung bei großer Geschwindigkeit und hoher Rauschleistung.
a) Zeitlicher Verlauf der Eingangsdaten des erfindungsgemäßen adaptiven Kalman-Filters.
b) Zeitlicher Verlauf des Errors vor der Filterung, nach einer Mittelwert-Filterung und nach der Filterung mit dem erfindungsgemäßen adaptiven Kalman-Filter.
- Figur 5:: Zeitdiagramme für eine Filterung bei kleiner Geschwindigkeit und kleiner Rauschleistung.
a) Zeitlicher Verlauf der Eingangsdaten des erfindungsgemäßen adaptiven Kalman-Filters.
b) Zeitlicher Verlauf des Errors vor der Filterung, nach einer Mittelwert-Filterung und nach der Filterung mit dem erfindungsgemäßen adaptiven Kalman-Filter.
- Figur 6:: Zeitdiagramme für ein Umschalten zwischen einem Kalman-Stillstandsfilter und Kalman-Bewegungsfilter des adaptiven Kalman-Filters.
a) Zeitlicher Verlauf von Positionsdaten des optischen Sensors.
b) Zeitlicher Verlauf des Errors.
- Figur 7:: Zeitdiagramme zur Testung der Robustheit des adaptiven Kalman-Filters.
a) Zeitlicher Verlauf einer sich aus einer Simulation ergebenden Geschwindigkeit.
b) Zeitlicher Verlauf des Errors vor der Filterung, nach einer Mittelwert-Filterung und nach der Filterung mit dem adaptiven Kalman-Filter.

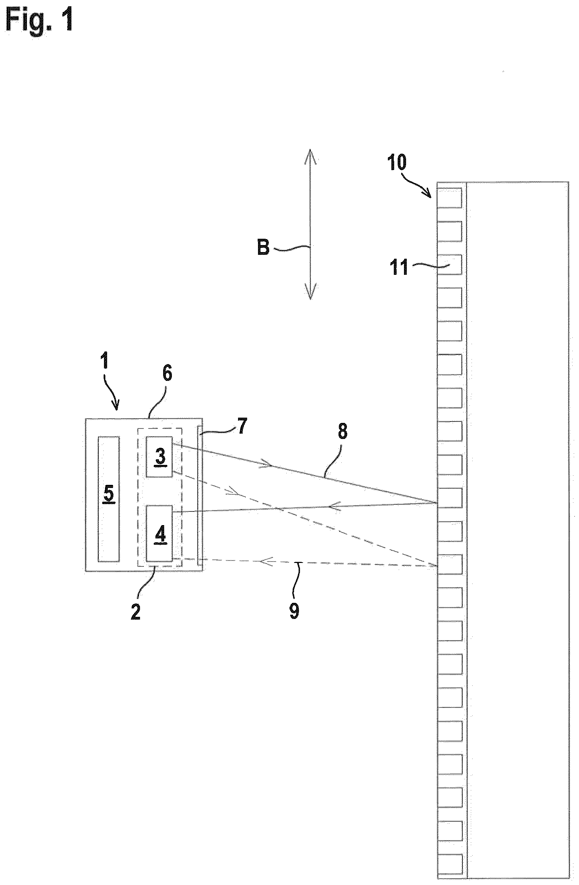

Figur 1 zeigt schematisch ein Ausführungsbeispiel des erfindungsgemäßen optischen Sensors 1 und einem Positionsmaßsystem 10. Der optische Sensor 1 und/oder das Positionsmaßsystem 10 sind beweglich angeordnet, so dass diese in der mit dem Pfeil B gekennzeichneten Bewegungsrichtung gegeneinander bewegbar sind. Mit der in Figur 1 dargestellten Anordnung können relativ zueinander bewegbare Gegenstände positioniert werden. Im vorliegenden Fall ist ein nicht dargestelltes Fahrzeug gegenüber einem stationären Gegenstand in Form eines Regallagers oder dergleichen zu positionieren. Der optische Sensor 1 ist dabei an dem Fahrzeug montiert, während das Positionsmaßsystem 10 am Regallager montiert ist.

Zur Erfassung der Fahrzeugposition relativ zum stationären Gegenstand wird das Positionsmaßsystem 10 fortlaufend mit dem optischen Sensor 1 abgetastet.

Der optische Sensor 1 gemäß Figur 1 umfasst eine Sende-/Empfangseinheit 2, die als Sender 3 eine Beleuchtungseinheit und als Empfänger 4 eine Flächenkamera aufweist, die an eine gemeinsame Auswerteeinheit 5 angeschlossen sind. Diese Komponenten des optischen Sensors 1 sind in einem Gehäuse 6 untergebracht, in dessen Frontwand ein lichtdurchlässiges Fenster 7 vorgesehen ist.

Die Flächenkamera ist als CCD-Kamera, CMOS-Kamera oder dergleichen ausgebildet und weist eine flächige matrixförmige Anordnung von Empfangselementen bildenden Pixeln auf. Der optische Sensor 1 ist dabei derart am Fahrzeug montiert, dass die Flächenkamera dem Positionsmaßsystem 10 auf gleicher Höhe gegenüberliegt, so dass ein Segment des Positionsmaßsystems 10 im Sichtfeld der Flächenkamera liegt. Somit treffen vom Sender 3 emittiert Sendelichtstrahlen 8 auf das Positionsmaßsystem 10 und werden als Empfangslichtstrahlen 9 zurück zum Empfänger 4 reflektiert.

In einer alternativen Ausgestaltung kann der optische Sensor 1 auch in Form eines Laserscanners ausgebildet sein.

Das Positionsmaßsystem 10 besteht aus einer Linearanordnung von äquidistant in Reihe angeordneten Marken, wobei die Marken im vorliegenden Fall als Barcodes 11 ausgebildet sind. Dabei können sowohl eindimensionale als auch zweidimensionale Barcodes 11 eingesetzt werden.

In den Marken sind als Positionsinformationen deren Absolutpositionen innerhalb des Positionsmaßsystems 10 kodiert. Durch die Erfassung der Kodierung der Marken und deren Lagen innerhalb der mit der Flächenkamera aufgenommenen Bilder kann die aktuelle Position des optischen Sensors 1 und damit des Fahrzeugs relativ zum Positionsmaßsystem 10 bestimmt werden.

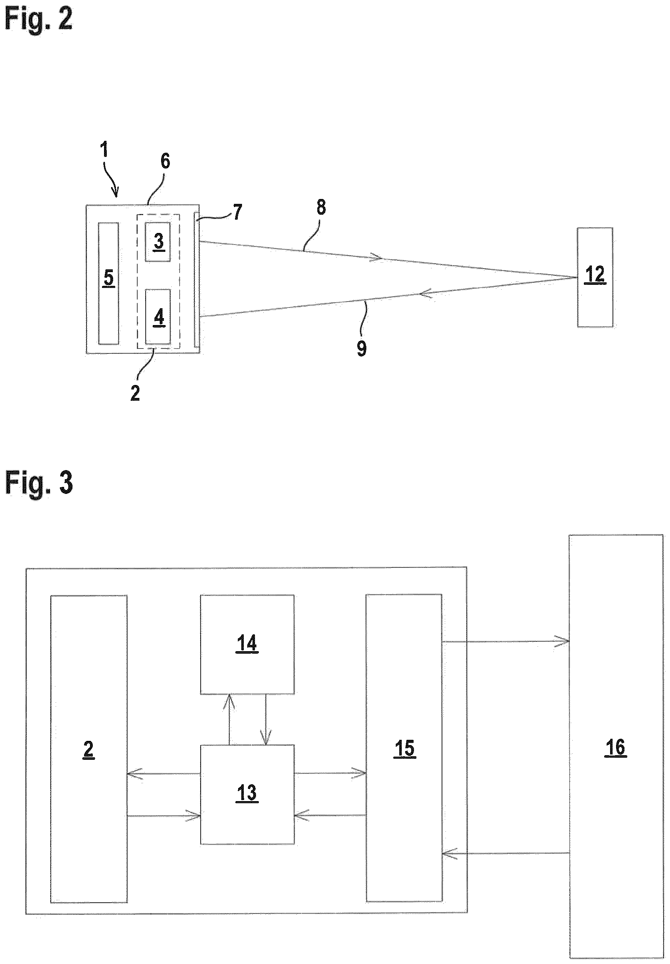

Figur 2 zeigt ein weiteres Ausführungsbeispiel eines optischen Sensors 1. Dieser optische Sensor 1 ist als Distanzsensor ausgebildet, der als Sender 3 eine Laserdiode aufweist und als Empfänger 4 eine Photodiode aufweist. Der Sender 3 und der Empfänger 4 bilden eine Sende-/Empfangseinheit 2, die wieder einer Auswerteeinheit 5 zugeordnet ist. Die Sensorkomponenten sind wieder in einem Gehäuse 6 mit einem Fenster 7 integriert. Die Auswerteeinheit 5 dient zur Steuerung 16 des Betriebes des Senders 3 und zur Auswertung der im Empfänger 4 generierten Empfangssignale.

Die Distanzmessung erfolgt nach einem Impuls-Laufzeitverfahren. Der Sender 3 emittiert hierzu Sendelichtstrahlen 8 in Form von einer Folge von Lichtimpulsen, die auf Messobjekt, das heißt ein zu detektierendes Objekt 12 treffen und von dort als Empfangslichtstrahlen 9 zum Empfänger 4 zurückreflektiert werden. In der Auswerteeinheit 5 wird aus der Laufzeit der Lichtimpulse zum Objekt 12 und zurück zum optischen Sensor 1 die Distanz des Objekts 12 berechnet.

Der optische Sensor 1 und/oder das Messobjekt können auf einer nicht dargestellten mobilen Einheit, insbesondere einem Fahrzeug angeordnet sein. Damit kann sich die Geschwindigkeit (und auch Position) des optischen Sensors 1 relativ zum Messobjekt ändern.

Figur 3 zeigt in Form eines Blockschaltbildes die Komponenten der Auswerteeinheit 5 zur Verarbeitung der Messwerte, das heißt Positions- oder Distanzwerte, die mit der Sende-/Empfangseinheit 2 des optischen Sensors 1 generiert werden.

An die Sende-/Empfangseinheit 2 ist eine Rechnereinheit 13 angeschlossen, in welche die Messwerte der Sende-/Empfangseinheit 2 eingelesen werden. Die Rechnereinheit 13 kann von einem Mikroprozessor oder dergleichen gebildet sein. An die Rechnereinheit 13 ist eine Speichereinheit 14 angeschlossen. Alternativ kann die Speichereinheit 14 in der Rechnereinheit 13 integriert sein. Die Rechnereinheit 13 mit der Speichereinheit 14 bildet die Auswerteeinheit 5 des optischen Sensors 1.

Die Rechnereinheit 13 ist über eine Kommunikationsschnittstelle 15 mit einer Steuerung 16 als externe Einheit gekoppelt. Über die Steuerung 16 können Auswertefunktionen gesteuert werden.

Erfindungsgemäß werden die Messwerte des optischen Sensors 1 mit einem adaptiven Kalman-Filter gefiltert.

Dabei besteht das adaptive Kalman-Filter aus mehreren Kalman-Filtern, die an unterschiedliche Bereiche der Rauschleistung der Messwerte und/oder unterschiedliche Bewegungssituationen angepasst sind.

Im vorliegenden Fall umfasst das adaptive Kalman-Filter ein Kalman-Stillstandsfilter und ein Kalman-Bewegungsfilter. Das Kalman-Stillstandsfilter und das Kalman-Bewegungsfilter weisen unveränderliche Filter-Parameter auf, wobei die Verstärkungen dieser Kalman-Filter unterschiedlich sind. Die entsprechenden Filter-Parameter sind in der Speichereinheit 14 gespeichert. Hierzu gehören die Kalman-Verstärkungsfaktoren der Kalman-Stillstandsfilter und Kalman-Bewegungsfilter und insbesondere der Kalman-Zustandsvektor der adaptiven Kalman-Filter. Im vorliegenden Fall weist das adaptive Kalman-Filter einen Zustandsvektor mit der Dimension M = 3 und den Zustandsgrößen Position, Geschwindigkeit und Beschleunigung auf.

Die Rechnereinheit 13 übernimmt die Berechnung für den Algorithmus des adaptiven Kalman-Filters. Auch die Durchführung der Filterung der Messwerte erfolgt in der Rechnereinheit 13. Generell kann hierfür auch ein separater Prozessor vorgesehen sein.

Mittels der Rechnereinheit 13 wird eine geschwindigkeitsabhängige Umschaltung zwischen Kalman-Filtern durchgeführt.

Generell wird ein mittels einer Geschwindigkeitsschätzung ermittelter Geschwindigkeitswert mit wenigstens einem Schwellwert verglichen und abhängig hiervon erfolgt die Umschaltung zwischen Kalman-Filtern.

Im vorliegenden Fall ist nur ein Schwellwert vorgesehen. Bei Geschwindigkeitswerten unterhalb des Schwellwerts ist nur das Kalman-Stillstandsfilter aktiviert. Bei Geschwindigkeitswerten oberhalb des Schwellwerts ist nur das Kalman-Bewegungsfilter aktiviert.

Die Geschwindigkeitsschätzung wird mit einem IIR-Filter durchgeführt, dessen Parameter ebenfalls in der Speichereinheit 14 abgespeichert sind.

Im vorliegenden Fall wird der mit der Geschwindigkeitsschätzung ermittelte Geschwindigkeitswert mit einem variablen Schwellwert verglichen.

Die Vorgabe des Schwellwerts erfolgt abhängig von der mittels eines IIR-Filters geschätzten Rauschleistung.

Die Parameter dieses IIR-Filters sind ebenfalls in der Speichereinheit 14 abgespeichert.

Der Ablauf zur Berechnung der Filterfunktionen in jedem Zeitschritt ist wie folgt.

In einem ersten Schritt wird eine Schätzung für den Kalman-Zustandsvektor berechnet.

In einem zweiten Schritt wird aus dem geschätzten Kalman-Zustandsvektor ein Positionswert entnommen und als Ausgabegröße ausgegeben.

In einem dritten Schritt erfolgt die Schätzung der Rauschleistung, die mit einem IIR-Filter 1. Ordnung durchgeführt wird.

In einem vierten Schritt wird abhängig von der ermittelten Rauschleistung der Schwellwert festgelegt und es erfolgt eine wie oben beschriebene Geschwindigkeitsschätzung.

In einem fünften Schritt wird geprüft, ob der aktuelle Geschwindigkeitswert oberhalb oder unterhalb des Schwellwerts liegt. Abhängig hiervon wird nur das Kalman-Stillstandsfilter oder das Kalman-Bewegungsfilter aktiviert, wobei im nächsten Zeitschritt mit dem aktivierten Filter die Filterung der Messwerte durchgeführt wird.

Schließlich erfolgt eine Initialisierung des Kalman-Zustandsvektors, falls im vorigen Zeitschritt ein anderes Filter aktiv war.

Dann wird die Filterung der Messwerte vorgenommen, wobei hierzu in einem ersten Schritt die Berechnung des Kalman-Zustandsvektors erfolgt.

Diese Filterung erfolgt in Echtzeit, das heißt in einem Zeitschritt wird ein aktueller verrauschter Positionswert erhalten, verarbeitet und gefiltert.

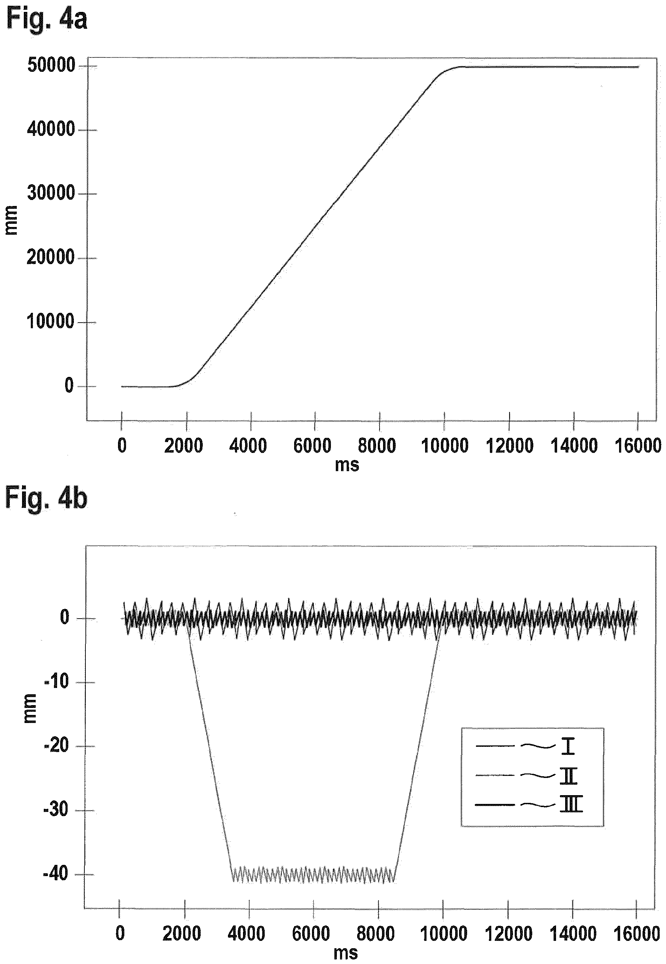

Die Figuren 4a, 4b zeigten Zeitdiagramme für eine Filterung bei hoher Geschwindigkeit und hoher Rauschleistung, wobei hierfür vorteilhaft der Kalman-Bewegungsfilter aktiviert ist.

In Figur 4a sind die verrauschten Messdaten dargestellt, die als Eingang für das Kalman-Filter dienen. Zudem liegen in der Simulation Soll-Daten (Positionsdaten ohne Rauschen) vor, wodurch Vergleiche und Berechnung des MSE (mean square error) möglich sind. In Figur 4b ist der Error vor der Filterung (I), nach einer Mittelwertfilterung (II) und nach der erfindungsgemäßen Kalman-Filterung gezeigt. Mit Error ist hierbei die Differenz zwischen gefiltertem Wert und Sollwert (Error nach Mittelwertfilter, Kalman-Filter) beziehungsweise Eingangswert und Sollwert (Error vor Filterung) gemeint. Das adaptive Kalman-Filter zeigt deutliche Vorteile, da es im Stillstand (Anfangs- und Endbereich) das Rauschen besser unterdrückt als das aus dem Stand der Technik bekannte Mittelwertfilter. Zudem erzeugt dieses keinen Schleppfehler bei hoher Geschwindigkeit (mittlerer Bereich). Der Schleppfehler beim Mittelwertfilter spiegelt sich in dem negativen Error bei etwa -41 mm wider.

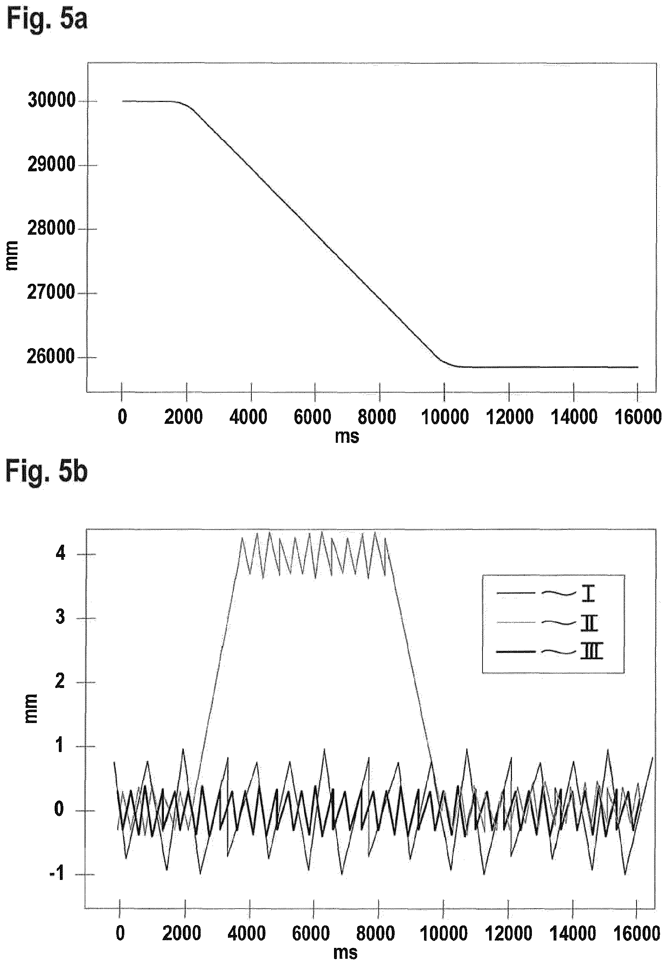

Ein Beispiel mit kleinerer Rauschleistung und kleinerer Geschwindigkeit ist in den Figuren 5a, 5b dargestellt.

Die Bezeichnungen I, II, III in Figur 5b entsprechen den Bezeichnungen I, II, III von Figur 4b. Auch in diesem Fall liefert die erfindungsgemäße Kalman-Filterung (III) bessere Ergebnisse als die mit Schleppfehlern behaftete Mittelwertfilterung (II) gemäß dem Stand der Technik.

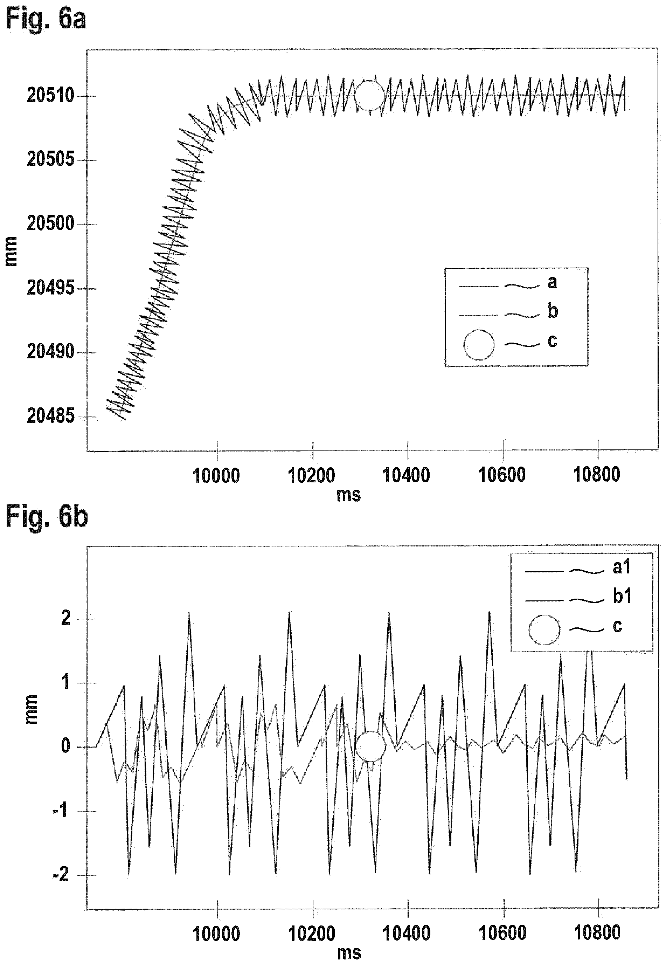

Die Figuren 6a, 6b zeigen die Situation bei Umschalten vom Kalman-Bewegungsfilter in den Kalman-Stillstandsfilter. Dabei zeigt Figur 6a den zeitlichen Verlauf der verrauschten Messwerte (a) zusammen vorgegebenen Sollwerten (b). Der Umschaltpunkt ist mit c bezeichnet.

Figur 6b zeigt einen vergrößerten Teilausschnitt von Figur 6a mit dem Error vor der Kalman-Filterung (a1) und dem Error nach der Kalman-Filterung (b1).

Wie aus Figur 6a ersichtlich, nehmen die Positionswerte bis zu einem Grenzwert zu, das heißt die Geschwindigkeit wird dann immer kleiner bis der Schwellwert erreicht ist und am Umschaltpunkt vom Kalman-Bewegungsfilter in den Kalman-Stillstandsfilter umgeschaltet wird. Bei einer Initialisierung des Zustandsvektors werden Geschwindigkeit und Beschleunigung zu null genutzt, so dass ein störendes Einschwingverhalten bei der Umschaltung vermieden wird.

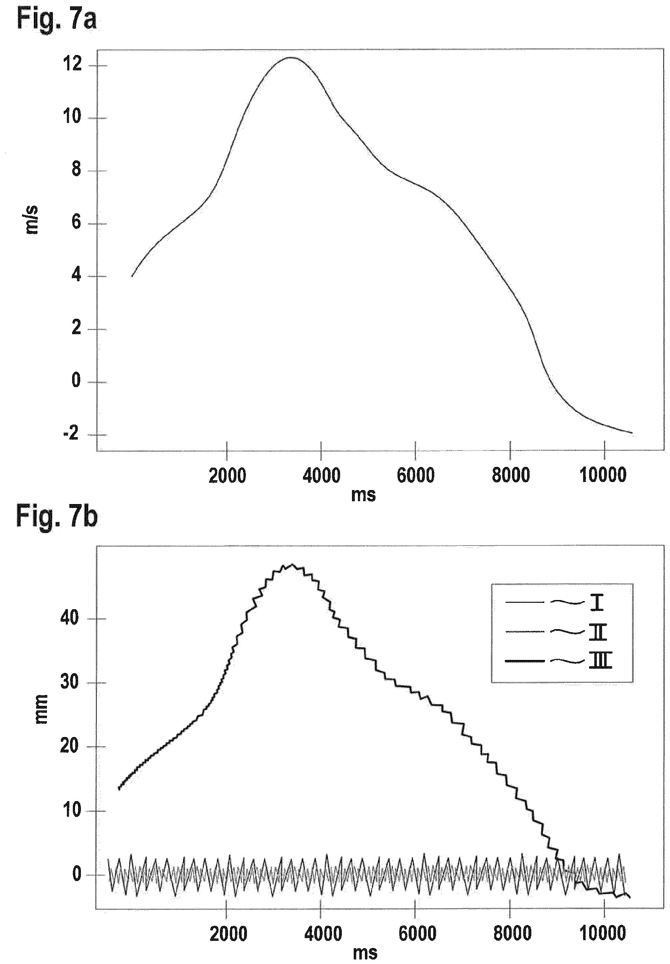

Die Figuren 7a, 7b veranschaulichen eine Testung der Robustheit des erfindungsgemäßen adaptiven Kalman-Filters. Wie Figur 7a zeigt, ändert sich die Geschwindigkeit in diesem Fall stark.

In Figur 7b ist hierfür wieder mit I der Error vor der Filterung, mit II der Error nach einer Mittelwertfilterung und mit III der Error nach der erfindungsgemäßen Kalman-Filterung dargestellt. Wie Figur 7b zeigt, ist in diesem Fall der Error nach einer Mittelwertfilterung sehr groß. Demgegenüber erweist auch die Kalman-Filterung als gut und robust, da das adaptive Kalman-Filter eine Rauschunterdrückung ohne Zeitverzögerungen bewirkt.

### B ezugszei chenli ste

- (1): Optischer Sensor
- (2): Sende-/Empfangseinheit
- (3): Sender
- (4): Empfänger
- (5): Auswerteeinheit
- (6): Gehäuse
- (7): Fenster
- (8): Sendelichtstrahlen
- (9): Empfangslichtstrahlen
- (10): Positionsmaßsystem
- (11): Barcodes
- (12): Objekt
- (13): Rechnereinheit
- (14): Speichereinheit
- (15): Kommunikationsschnittstelle
- (16): Steuerung

## Patentansprüche

1. Optischer Sensor (1) zur Detektion von Objekten (12) mit einer Sende-/Empfangseinheit (2), umfassend einen Sendelichtstrahlen (8) emittierenden Sender (3) und einen Empfangslichtstrahlen (9) empfangenden Empfänger (4), und mit einer Auswerteeinheit (5), in welcher in Abhängigkeit von Empfangssignalen des Empfängers (4) eine zeitliche Folge von Messwerten generiert ist, wobei die Messwerte Distanzwerte oder Positionswerte sind, **dadurch gekennzeichnet, dass** wenigstens ein adaptives Kalman-Filter vorgesehen ist, in welchem die Messwerte gefiltert sind.

2. Optischer Sensor (1) nach Anspruch 1, **dadurch gekennzeichnet, dass** für die Messwerte ein applikationsabhängiger Bereich der Rauschleistung gegeben ist, wobei der wenigstens eine Kalman-Filter an diesem Bereich angepasst ist.

3. Optischer Sensor (1) nach einem der Ansprüche 1 oder 2, **dadurch gekennzeichnet, dass** das oder jedes Kalman-Filter eine Dimension M = 3 oder M = 4 aufweist.

4. Optischer Sensor (1) nach einem der Ansprüche 2 oder 3, **dadurch gekennzeichnet, dass** nur ein adaptives Kalman-Filter vorgesehen ist, das an den gesamten Bereich der Rauschleistung angepasst ist.

5. Optischer Sensor (1) nach Anspruch 3, **dadurch gekennzeichnet, dass** mehrere adaptive Kalman-Filter vorgesehen sind, die an unterschiedliche Bereiche der Rauschleistung angepasst sind.

6. Optischer Sensor (1) nach Anspruch 5, **dadurch gekennzeichnet, dass** die Parameter der Kalman-Filter für unterschiedliche Geschwindigkeitsbereiche der Geschwindigkeit des optischen Sensors (1) relativ zu einem Messobjekt eingelernt werden.

7. Optischer Sensor (1) nach Anspruch 6, **dadurch gekennzeichnet, dass** ein Kalman-Stillstandsfilter und ein Kalman-Bewegungsfilter vorgesehen sind.

8. Optischer Sensor (1) nach einem der Ansprüche 5 bis 7, **dadurch gekennzeichnet, dass** eine geschwindigkeitsabhängige Umschaltung zwischen Kalman-Filtern durchgeführt wird.

9. Optischer Sensor (1) nach Anspruch 8, **dadurch gekennzeichnet, dass** ein mittels einer Geschwindigkeitsschätzung ermittelter Geschwindigkeitswert mit wenigstens einem Schwellwert verglichen wird und abhängig hiervon die Umschaltung zwischen Kalman-Filtern erfolgt.

10. Optischer Sensor (1) nach Anspruch 9, **dadurch gekennzeichnet, dass** nur ein Schwellwert vorgesehen ist, und dass bei Geschwindigkeitswerten unterhalb des Schwellwerts nur das Kalman-Stillstandsfilter aktiviert ist, und dass bei Geschwindigkeitswerten oberhalb des Schwellwerts nur das Kalman-Bewegungsfilter aktiviert ist.

11. Optischer Sensor (1) nach einem der Ansprüche 9 oder 10, **dadurch gekennzeichnet, dass** die Geschwindigkeitsschätzung mit wenigstens einem der Kalman-Filter und/oder mit einem weiteren Filter durchgeführt wird.

12. Optischer Sensor (1) nach Anspruch 11, **dadurch gekennzeichnet, dass** das weitere Filter eine variable Zeitdifferenz und ein IIR-Filter beinhaltet.

13. Optischer Sensor (1) nach einem der Ansprüche 9 bis 12, **dadurch gekennzeichnet, dass** der oder jeder Schwellwert ein variabler, von der Rauschleistung abhängiger Schwellwert ist.

14. Optischer Sensor (1) nach Anspruch 13, **dadurch gekennzeichnet, dass** die Vorgabe des Schwellwerts abhängig von der mittels eines IIR-Filters geschätzten Rauschleistung erfolgt.

15. Optischer Sensor (1) nach einem der Ansprüche 1 bis 14, **dadurch gekennzeichnet, dass** die Filterung der Messwerte und deren Ausgabe in Echtzeit erfolgt.

16. Optischer Sensor (1) nach einem der Ansprüche 1 bis 15, **dadurch gekennzeichnet, dass** dieser ein Distanzsensor ist.

17. Optischer Sensor (1) nach Anspruch 16, **dadurch gekennzeichnet, dass** im Distanzsensor eine Distanzmessung nach einem Phasenmessverfahren oder einem Impuls-Laufzeitverfahren durchgeführt wird.

18. Optischer Sensor (1) nach einem der Ansprüche 1 bis 17, **dadurch gekennzeichnet, dass** dieser ein Codeleser ist, mittels dessen in Marken eines Positionsmaßsystems (10) enthaltende Codes erfassbar sind, wobei in den Codes einer Marke jeweils deren Position innerhalb des Positionsmaßsystems (10) kodiert ist.

19. Verfahren zur Detektion von Objekten (12) mittels eines optischen Sensors (1) mit einer Sende-/Empfangseinheit (2), umfassend einen Sendelichtstrahlen (8) emittierenden Sender (3) und einen Empfangslichtstrahlen (9) empfangenden Empfänger (4), und mit einer Auswerteeinheit (5), in welcher in Abhängigkeit von Empfangssignalen des Empfängers (4) eine zeitliche Folge von Messwerten generiert wird, wobei die Messwerte Distanzwerte oder Positionswerte sind, **dadurch gekennzeichnet, dass** wenigstens ein adaptives Kalman-Filter vorgesehen ist, in welchem die Messwerte gefiltert werden.
